# EUROPEAN PATENT APPLICATION

(11) **EP 3 121 956 A1**
(43) Date of publication of application: **25.01.2017**
(21) Application number: 16178799.9
(22) Date of filing: 11.07.2016
(51) Int. Cl.: H02P 27/08

(54) **BRUSHLESS MOTOR CONTROLLER AND METHOD OF CONTROLLING A BRUSHLESS MOTOR**

(30) Priority: 24.07.2015 HK 15107101
(71) Applicant: Rich Life Consultants Limited, Kowloon (HK)
(72) Inventor: HUNG, Chun Sing, Kowloon (HK); WU, Wing Kin, Kowloon (HK)
(74) Representative: Ward, David Ian

(57) **Abstract**

The present invention describes a brushless motor controller including: a microcontroller adapted to connect to one or more rotor position detector of an external brushless motor; and a plurality of motor driving circuits adapted to connect to a plurality of windings of the external brushless motor. The microcontroller is connected to the plurality of motor driving circuits. The microcontroller is adapted to, based on a desired speed of the external brushless motor, output one of a first motor control signal and a second motor control signal to the motor driving circuits for driving the external brushless motor; the first and second motor control signals having different waveform shapes. The present invention provides a flexible method of changing the control method of the brushless motor, which combines the advantages of both sine wave drive and square wave drive.

## Description

### FIELD OF INVENTION

This invention relates to brushless motors and in particular controllers for the brushless motors and control methods of brushless motors.

### BACKGROUND OF INVENTION

With energy conservation issues continue to be taken seriously by the world, brushless DC motors are used more and more widely in various occasions, for example in modem home appliances. In contrast to conventional brush-type motors, brushless DC motors have the advantages of low noise, high energy efficiency and durability, etc.

Brushless DC motors are controlled typically by a motor controller connected to windings of the motor in different phases. As there is no brush and commutator structure in brushless DC motors, it leaves to the motor controller for generating alternative control pulse control to maintain the rotation of the motor. A typical form of control signals used for brushless motor is the Pulse Width Modulation (PWM) signal. There are in general two types of control signals used to drive brushless DC motors, i.e. square wave drive (sometimes called trapezoidal-wave) and sine wave drive. However, each of the square wave drive and sine wave drive possesses certain disadvantages and advantages compared to the other one. For square wave drive, there is less amount of switching actions made by the switching elements (e.g. FETs) so that its switching loss is low, making it ideal for high energy output occasions. However, square wave drive is vulnerable to large driving torque ripple due to the drastic change of signal level, and the presence of electromagnetic noise, in particular when the motor speed is low. On the other hand, sine wave drive of brushless DC motors generates less electromagnetic noise, and has lower torque ripple due to its proximity to an ideal magnetic flux trace of motors. However, due to the frequent switching actions during the motor rotation, the switching loss involved in sine wave drive is comparatively larger.

### SUMMARY OF INVENTION

In the light of the foregoing background, it is an object of the present invention to provide an alternate brushless motor controller and control method thereof which combine the advantages of each of the sine wave drive and square wave drive, so that the brushless motor could achieve overall high efficiency and at the same time maintains quietness and smooth operation where possible.

The above object is met by the combination of features of the main claim; the subclaims disclose further advantageous embodiments of the invention.

One skilled in the art will derive from the following description other objects of the invention. Therefore, the foregoing statements of object are not exhaustive and serve merely to illustrate some of the many objects of the present invention.

Accordingly, the present invention, in one aspect, is a brushless motor controller including: a microcontroller adapted to connect to one or more rotor position detector of an external brushless motor; and a plurality of motor driving circuits adapted to connect to a plurality of windings of the external brushless motor. The microcontroller is connected to the plurality of motor driving circuits. The microcontroller is adapted to, based on a desired speed of the external brushless motor, output one of a first motor control signal and a second motor control signal to the motor driving circuits for driving the external brushless motor. The first and second motor control signals have different waveform shapes.

Preferably, the microcontroller is configured to output the first motor control signal when a rotational speed of the external brushless motor is below a threshold. The microcontroller is configured to output the second motor control signal when the rotational speed of the external brushless motor is above the threshold.

More preferably, when the microcontroller is about to change from outputting the first motor control signal to outputting the second motor control signal or vice versa, the microprocessor controls the motor driving circuits to cease supplying electrical currents to the plurality of windings of the external brushless motor for a predetermined period of time.

In one variation, the predetermined period of time is chosen such that after the change, the first motor control signal or second motor control signal becomes synchronized with rotation of the external brushless motor.

Preferably, the synchronization of the first motor control signal or second motor control signal, with the rotation of the external brushless motor, includes configuring the first motor control signal or second motor control signal to be in phase with output signals of the rotor position detector.

In one variation, the microcontroller further contains a memory; the memory storing information including a first look-up table. The microcontroller further determines a duty cycle of the first motor control signal or second motor control signal according to the first look-up table after the change.

Preferably, in the first look-up table, each value of the duty cycle corresponds to a value of the rotational speed or rotor position of the external brushless motor.

In another exemplary embodiment, before or after the microcontroller changes from outputting the first motor control signal to outputting the second motor control signal or vice versa, the microprocessor applies a phase shift to the first motor control or the second motor control signal.

Preferably, the microcontroller further contains a memory which stores information including a second look-up table. The phase shift is determined by the microcontroller from the second look-up table.

More preferably, in the second look-up table, each value of the phase shift corresponds to a value of the rotational speed of the external brushless motor.

In one implementation, when the microcontroller is about to change from outputting the second motor control signal to outputting the first motor control signal, and before the motor driving circuits ceasing to supply the electrical current to the plurality of windings, the microprocessor controls the motor driving circuits to decrease the rotational speed of the motor to a safety value for the first motor control signal.

In one implementation, the first motor control signal is a sine wave signal, and the second motor control signal is a square wave signal.

In one implementation, the sine wave signal and the square wave signal have the same amplitudes.

In one implementation, the desire speed is supplied to the microcontroller by a user inputting device connected to the brushless motor controller.

In one implementation, the rotor position detectors are Hall effect sensors.

According to another aspect of the present invention, a method of controlling a brushless motor, includes the steps of running a brushless motor at an original rotational speed by one of a first motor control and a second motor control signal; and changing the brushless motor to run at a target rotational speed by the other one of a first motor control and a second motor control signal. The target rotational speed is different from the original rotational speed and the first and second motor control signals have different waveform shapes.

Preferably, the running step contains outputting the first motor control signal for controlling the brushless motor when a rotational speed of the external brushless motor is below a threshold, and outputting the second motor control signal for controlling the brushless motor when a rotational speed of the external brushless motor is above the threshold.

More preferably, the method further contains the step of ceasing supply of electrical currents to a plurality of windings of the brushless motor for a predetermined period of time before the changing step.

In one implementation, the predetermined period of time is chosen such that after the step of ceasing supply of the electrical currents, the first motor control signal or second motor control signal becomes synchronized with rotation of the brushless motor.

Preferably, the synchronization of the first motor control signal or second motor control signal, with the rotation of the external brushless motor, includes the step of configuring the first motor control signal or second motor control signal to be in phase with output signals of the rotor position detector.

In one variation, the method further comprises the step of setting, before the changing step, a duty cycle of the first motor control signal or second motor control signal at the target speed.

Preferably, the setting step contains looking up for a value of the duty cycle in a first look-up table according to the target speed of the brushless motor.

In another variation, the method further contains the step of applying a phase shift to the first motor control or the second motor control signal before or after the changing step.

Preferably, the phase shift is determined by looking up in a second look-up table according to the target speed of the brushless motor.

In one implementation, the method further contains the step of decreasing the original speed to a safety value for the other one of first motor control signal or the second motor control signal at the target speed, if the original speed is higher than the target speed.

In one implementation, the first motor control signal is a sine wave signal, and the second motor control signal is a square wave signal.

In one implementation, the sine wave signal and the square wave signal have the same amplitudes.

There are many advantages to the present invention, as the brushless motor controller in the present invention combines the advantages of both sine wave drive and square wave drive in different speed regions. In particular, the brushless motor controller and the control method in the present invention dynamically change the PWM control signal to the brushless motor according to the desired speed of the motor. The sine wave drive can be used during motor startup and when the motor is running in the low speed regions. For low speed scenarios, the sine wave drive provides a quiescent working environment with low electromagnetic noise, and there is less torque ripple incurred during the low speed running. The motor operation using the sine wave drive is smoother, which produces less vibration. For high speed scenarios, the square wave drive provides a high efficiency performance due to the lower amount of switching actions in this drive mode.

Another advantage is that the present invention can be used in most existing brushless motors, as the control method described herein has no particular requirement on the structure of the brushless motor. As long as rotational position detectors of the motor are available, for example on-board Hall sensors, any kind of brushless motor can be implemented with the dynamic PWM control method according to the present invention by connecting the motor to an external motor controller.

### BRIEF DESCRIPTION OF FIGURES

The foregoing and further features of the present invention will be apparent from the following description of preferred embodiments which are provided by way of example only in connection with the accompanying figures, of which:
Fig. 1 is a disassembled view of a brushless motor which can be used with the brushless motor controller according to an embodiment of the present invention.
Fig. 2 shows the schematic diagram of a brushless motor controller according to an embodiment of the present invention, and the connection between the brushless motor controller and a brushless motor.
Fig. 3 is the flow chart of the PWM control signal change method according to an embodiment of the present invention.
Fig. 4 is the flow chart of the PWM control signal change method according to another embodiment of the present invention.
Fig. 5 shows the transition from a square wave drive to sine wave drive in the time domain, accompanied by the Hall sensor output signals, according to one embodiment of the present invention.
Fig. 6 shows the transition from a sine wave drive to square wave drive in the time domain, accompanied by the Hall sensor output signals, according to one embodiment of the present invention.

### DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

As used herein and in the claims, "couple" or "connect" refers to electrical coupling or connection either directly or indirectly via one or more electrical means unless otherwise stated.

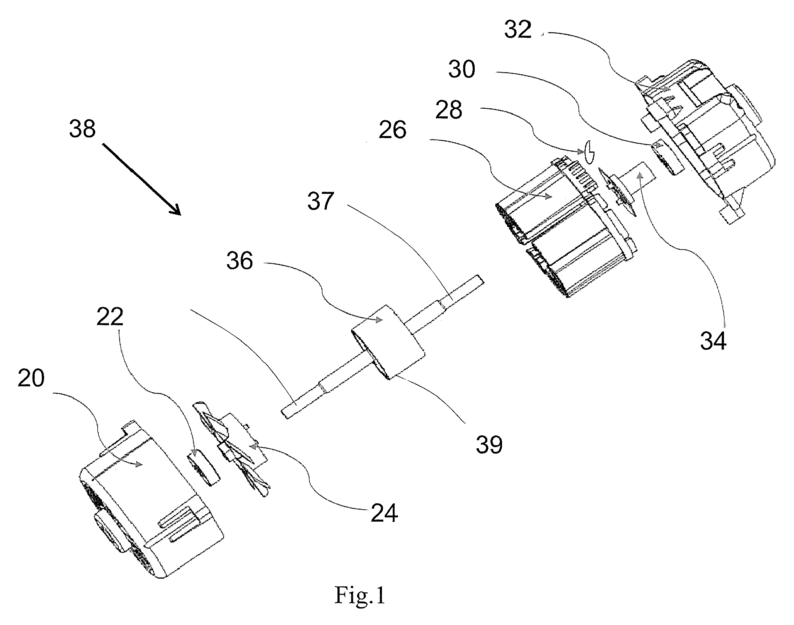

Referring now to Fig. 1, which shows the structure of a brushless motor **38.** The brushless motor **38** may be connected to a brushless motor controller (not shown) according to embodiments of the present invention. The brushless motor **38** includes a first end cap **20,** a motor fan **24,** a rotor assembly **36,** a stator assembly **26,** and a second end cap **32,** all of which are aligned along the central axis of the motor **38** when assembled. The rotor assembly **36** includes a rotor core **39** which is configured with permanent magnets (not shown), and a motor shaft **37** on which the rotor core **39** is fixedly mounted. There are bushings **30** and **22** configured to rotatably support the motor shaft **37** on the second end cap **32** and first end cap **30** respectively. A shaft retainer **34** is configured to limit the shaft **37** in its longitudinal position. There is also a circuit board **28** mounted to the second end cap **32** or the stator assembly **26.** On the circuit board **28** there are one or more Hall effect sensors (not shown) configured which provide the function of monitoring the position of the rotor assembly **36.** The stator assembly **26** comprises a plurality of windings (not shown) located on teeth of the stator laminate. The windings are adapted to the external motor controller so that the electrical currents sent by the motor controller to the windings are capable of driving the motor **38** to rotate.

Those skilled in the art would understand that the above described brushless motor is a typical configuration of this kind and there can be many other different designs of brushless motors. As such, the present invention is not limited to application on a specific type of brushless motor or brushless motor with any specific internal structure. Rather, the motor controller described in the present invention is capable of connecting to any type of brushless motor and driving the same to achieve the technical effect of the present invention, as long as such brushless motor are configured with necessary rotation position detectors such as Hall effect sensors described above.

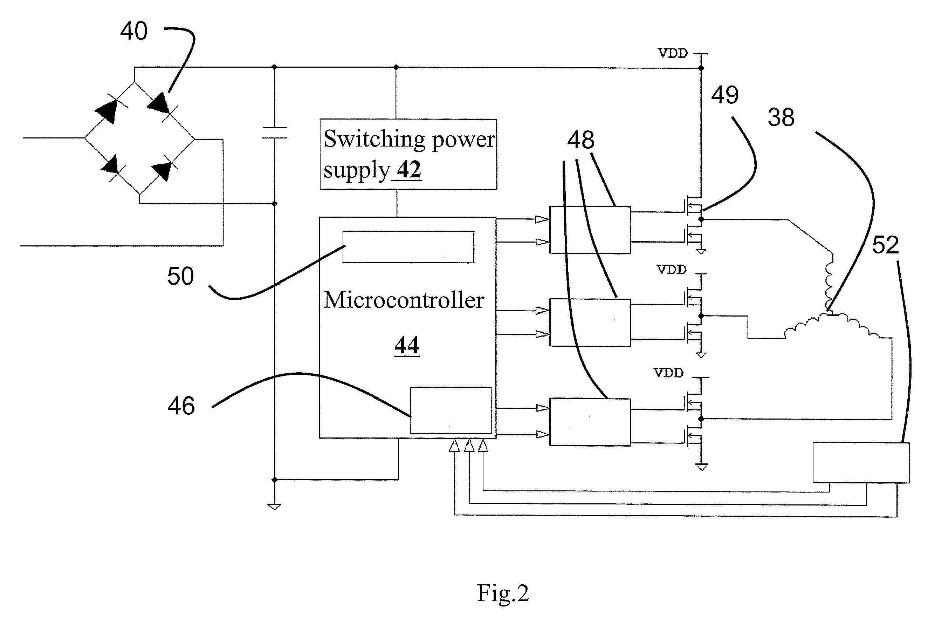

Referring now to Fig. 2, the components of a brushless motor controller according to one embodiment of the present invention is shown. There is a bridge rectifying circuit **40** in the motor controller which is adapted to transfer incoming AC voltages (e.g. those from the mains power) to DC voltage, as those skilled in the art would understand. The outputs of the bridge rectifying circuit **40** is then supplied to a switching power supply **42** which converts the incoming DC voltage to different voltages suitable for driving the microcontroller **44** and the MOSFET drivers **48** respectively. The microcontroller **44** is connected to the plurality of MOSFET drivers **48** to provide control signals to these MOSFET drivers **48.** The MOSFET drivers **48** each is connected to a set of MOSFETs **49** to generate the electrical currents for supplying electrical current to the three phase windings of the brushless motor **38.** Together, the MOSFET drivers **48** and MOSFETs **49** form the motor driving circuits of the brushless motor controller. The MOSFET drivers **48** are used to raise the control signals outputted by the microcontroller **44** to the motor supply voltage level, which is larger than the microcontroller output signal by orders of magnitudes. As shown in Fig. 2, the brushless motor **38** is a three-phase brushless motor, and there can be more than one stator windings (not shown) corresponding to each phase. Accordingly, there are three MOSFET drivers **48** in the brushless motor corresponding to each one of the three phases. In addition, the microcontroller **44** is adapted to connect to the Hall sensor board **52** in the brushless motor **38** for receiving signals indicating the rotor position of the brushless motor **38**. As shown in Fig. 2, there are three Hall sensors in the Hall sensor board **52,** each providing a sensor reading for a 120° span of the 360° range of rotation. For the three Hall sensors in the Hall sensor board **52,** their outputs in combination can be represented in the form of a three digit binary number (for example 101, 001, 100...), which correspond to the six equally divided sectors in the 360° range of rotation.

The microcontroller **44** is capable of generating two different types of control signals for driving the brushless motor **38.** In particular, the microcontroller **44** is able to generate both a sine wave control signal and a square wave control signal. As those skilled in the art would understand, the sine wave signal and square wave signal are different signals as they have different shapes of waveform. The sine wave signal exhibits a smooth curve shape in the waveform but the square wave has a waveform shape with acute angles. The microcontroller **44** contains an internal memory **50** which stores parameters for generating the required sine wave control signal or square wave control signal. The internal memory **50** for example stores look-up tables to determine parameters in relation to phase shift and duty cycle of the control signals, which will be described in more details below. There is also a zero-crossing detection module **46** in the microcontroller **44,** which may be implemented either as an embedded hardware module or a pure software module in the microcontroller **44.** The zero-crossing detection module **46** is used to detect from the readings of the Hall sensors in the Hall sensor board **52** to see if the rotor is rotated to a particular angular position.

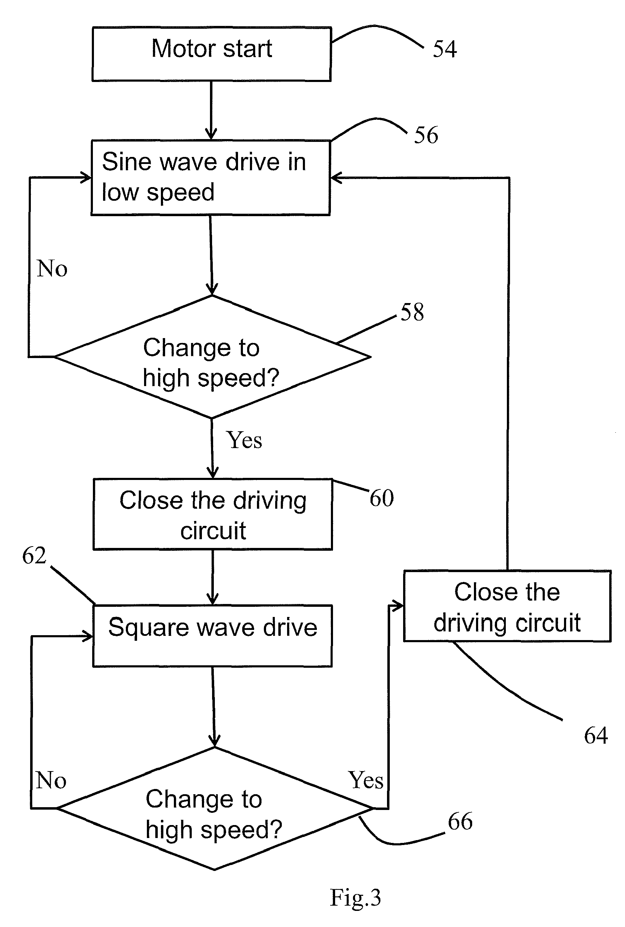

Now turning to the operation of the brushless motor controller described above, Fig. 3 shows how the brushless motor connected to a brushless motor controller in the present invention can be driven with one of the two alternative PWM control signals. More importantly, the motor control method described herein allows dynamic change of motor drive methods, i.e. the change from sine wave drive to square wave drive or vice versa can be made when the motor is running. The motor starts operation in Step **54,** where the motor controller is powered on and ready to supply PWM control signals. Despite the desired speed of the motor, sine wave drive is used in Step **56** to start the motor rotation from zero to the desired speed, in order to ensure a smooth starting process and to avoid electromagnetic noise at the low speed region.

Note that the desired speed may be inputted to the microcontroller in different ways. In one embodiment, there are hardware keys / buttons implemented on the house appliances in which the brushless motor is installed to allow the user to select the desired speed lever, for example the required air flow level of a kitchen ventilator or a fan. The desired speed could range from low speed levels to high speed levels. In the low speed levels, sine wave drive is used to provide low electromagnetic noises and smaller vibration of the motor. However, in the high speed levels, square wave drive is used to provide higher performance.

The definition of high speed and low speed is not fixed and universal for different brushless motors. Rather, for each specific brushless motor the definition of high speed (suitable for square wave drive) and that of low speed (suitable for sine wave drive) may be different as it is affected by the physical structure and electrical characteristics of the specific brushless motor. However, in general a threshold can be chosen for each specific brushless motor so that if the motor runs at a speed lower than the threshold, sine wave drive should be used but if the motor runs at a speed higher than the threshold, square wave drive should be used. In the circumstances where a limited number of speed levels (e.g. in power tools, kitchen ventilators or desktop fans), then it may be configured that one or two speed levels correspond to the low speed levels and the other speed levels correspond to the high speed levels.

Once the motor is started and runs at the low speed, the microcontroller in the brushless motor controller then determines whether there is a demand to change the motor to run at a high speed. Such a demand may have existed since motor start-up, e.g. the user presses a key corresponding to a high speed level to start the house appliance, or the demand may be received by the microcontroller later during operation of the brushless motor. In Step **58,** if the motor controller detects that the motor is not to be changed to run at a high speed, then the method goes back to Step **56** and the motor continues to run at a low speed. The monitoring of the desired speed of the motor however continues, so that once the desired speed is a high speed the change of operation of the motor can be taken immediately.

In Step **58** if it is found that the desired speed is indeed a high speed, and a change of the motor drive method is needed, then the method goes to Step **60.** Before the microcontroller starts to output the square wave control signal, the microcontroller firstly closes for a temporary period of time the motor driving circuits (e.g. MOSFET drivers and MOSFETs) connected to the microcontroller. That is, during the predetermined temporary period, the motor driving circuits cease to supply electrical current to the stators windings of the motor any more, and as a result the motor starts to do free running. During the free running period, the motor still rotates, but based on its inertia. At the same time, the Hall sensors in the brushless motor keep monitoring rotator position of the brushless motor and feedback such angular position of the rotor to the microcontroller..

Once the rotor of the brushless motor during the free running period reaches a particular angular position (as detected by the zero-crossing detection module in the microcontroller on the Hall sensors outputs), the brushless motor controller then starts providing the square wave drive in Step 62. By outputting the square wave control signal only at the time the rotor reaches a specific angular position, the control signal and the rotation of the motor is therefore synchronized which would allow the motor to work in the most efficient way. That is, the control signal becomes in phase with the rotation of the motor.

The square wave control signal is determined before outputting to the motor driving circuits for its duty cycle. For different motor rotational speeds, the duty cycle of the square wave control signal is different. To provide the function of selecting an appropriate duty cycle for the square wave signal for the desired speed, the microcontroller stores a look-up table in its internal memory. The look-up table contains entries correlating the value of the duty cycle to the values of the rotational speed of the motor. For particular rotational speed or a range of speed of the motor, there is a specific value of duty cycle provided. The microcontroller before outputting the square wave control signal look up for the appropriate duty cycle in the table, and then modulates the PWM control signal and outputs it to the motor driving circuits. The brushless motor can then run at the desired high speed.

As long as the motor is running at a high speed, the brushless motor controller may, similar to Step **58,** monitors for any change in desired speed in Step **66.** In Step **66,** if the motor controller detects that the motor is not to be changed to run at a low speed, then the method goes back to Step **62** and the motor continues to run at a high speed using square wave drive. The monitoring of the desired speed of the motor however continues, so that once the desired speed is a low speed the change of operation of the motor can be taken immediately.

In Step **66** if it is found that the desired speed is indeed a low speed, and a change of the motor drive method is needed, then the method goes to Step **64.** In Step **64** the motor driving circuits are also temporally shut down similar to the case in Step **56.** Once the rotor of the brushless motor during the free running period reaches a particular angular position (as detected by the zero-crossing detection module in the microcontroller on the Hall sensors outputs), the brushless motor controller starts providing the sine wave drive in Step **56.** Similarly to the case of square wave drive, the microcontroller in the brushless motor controller looks for an appropriate value of duty cycle of the sine wave signal. What is different here is that for the sine wave signal, the duty cycle is determined based on phase of the rotor of the motor. There is also a look-up table stored in the memory of the microcontroller which stores the value of duty cycle of the sine wave signal in three phases, which corresponds to values or a range of values of phase of the rotation. The phase of rotation of the motor is determined from the outputs of the Hall sensors. The duty cycle of the sine wave signal at the desired speed is then determined using the mean value of the current phase and the next phase of the rotor, and then look-up for a corresponding duty cycle based on this mean value in the look-up table. After determining the suitable duty angle, the brushless motor can then run at the desired low speed by sine wave drive. The above change of motor drive methods may be iterated so that a dynamic change may be made multiple times during the motor operation.

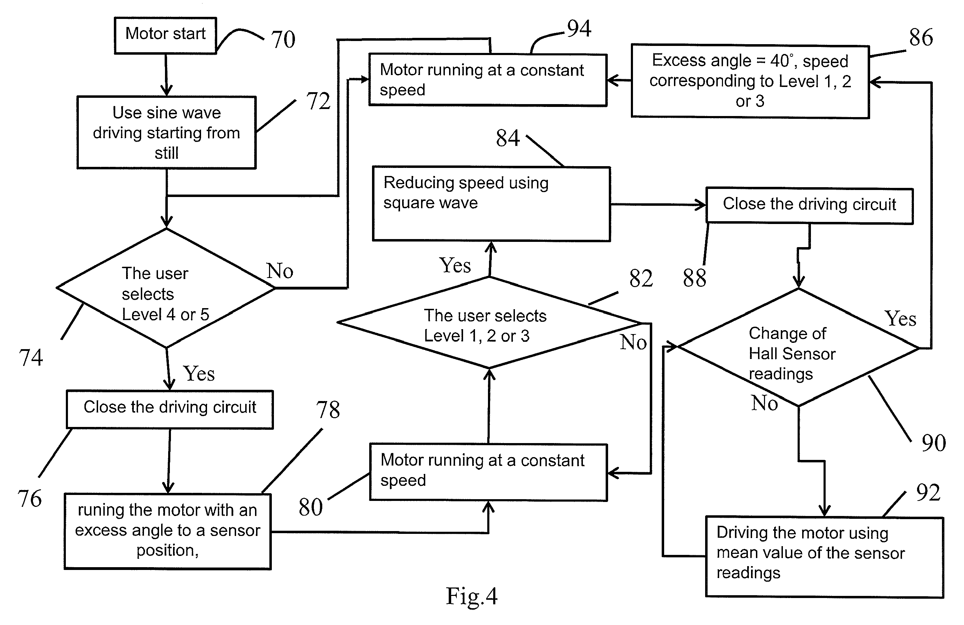

In another embodiment as shown in Fig. 4, a variation of the brushless motor control method is illustrated. The description below would only emphasize on differences of the method in Fig. 4 compared to that in Fig. 3. For the sake of brevity, identical or similar descriptions to the method steps of definitions of terms may be omitted. The method of Fig. 4 starts in Step **70,** where the motor controller is powered on and ready to supply PWM control signals. Sine wave drive is used in Step **72** to start the motor rotation from zero to a low speed, in order to ensure a smooth starting process and to avoid electromagnetic noise at the low speed region. The desired speed could range from low speed levels to high speed levels. In the low speed levels, sine wave drive is used to provide low electromagnetic noises and smaller vibration of the motor. However, in the high speed levels, square wave drive is used to provide higher performance.

In this exemplary embodiment, the desired speed is inputted to the brushless motor controller by the user pressing on one of the five hardware keys on the electrical appliances. Each hardware key correspond to a speed level, and the keys are configured such that at any time only one key can be pressed down while all the other keys will be reset. There are five speed levels associated with the five keys, and Levels 1-3 correspond to low speed levels, while Levels 4-5 correspond to high speed levels. Preferably, the user should start the operation of the house appliance using one of the low speed levels 1-3.

When the motor is started up and runs at one of the low speed levels after Step 72, the microcontroller in the brushless motor controller detects inputs from the user, and whether the users selects Level 4 or 5 by pressing corresponding keys in Step 74. In Step **74,** if the motor controller detects that the motor is not to be changed to run at a high speed, then the method goes to Step **94** in which the motor runs at a constant low speed using sine wave drive. The monitoring of the desired speed of the motor however continues, so that once the desired speed is a high speed the change of operation of the motor can be taken immediately. However, in Step **74** if it is found that the desired speed is indeed a high speed, and a change of the motor drive method is needed, then the method goes to Step **76.** In Step **76** the motor driving circuits are temporally shut down similar to those described in the method of Fig. 3. The square wave control signal is outputted to start driving the motor again only when the motor reaches a particular angular position so that the control signal is synchronized with the rotation of the motor. That is, the control signal becomes in phase with the rotation of the motor.

After the temporary period of ceasing current supply to the motor is finished and the motor started to be driven by square wave control signal, the motor controller performs an additional step **78** to add an excess angle to the motor control signal. The excess angle is essentially a phase shift to the motor control signal and by shifting the phase of the control signal to a predetermined amount, the control signal can be made to have a specific phase difference with the Hall sensor outputs. As the Hall sensor outputs reflect the real-time angular position of the rotor of the brushless motor, the control signal is in turn made with a phase difference with the rotation of the motor. Application of the excess angle would improve the performance of the brushless motor. Similar to the duty cycle described above, the excess angle values are stored in a look-up table in the internal memory of the microcontroller. For the rotational speed values or a range of speed values of the motor, there is a specific excess angle stored in the look-up table. The microcontroller looks up in this table based on the real-time rotational speed to find the required excess angle, and applies the excess angle to the control signal. Table 1 below shows an example of the look-up table storing excess angles. One can see that in the speed range of 0∼2100rpm, there are five excess angle values in the table, each of which corresponds to a range of rotational speed.

**Table 1**

| RPM | <550 | 550-750 | 750-1250 | 1250-1530 | 1530-2100 |
|---|---|---|---|---|---|
| ExcessAngle | 5 | 10 | 30 | 35 | 50 |

After the excess angle is applied to the square wave control signal, the motor then runs at a constant speed which is the desired speed in Step **80.** The microcontroller in the brushless motor controller continues to detect inputs from the user, and whether the user selects Level 1, 2 or 3 by pressing corresponding keys in Step **82.** In Step **82,** if the motor controller detects that the motor is not to be changed to run at a low speed, then the method goes to Step **80** in which the motor runs at a constant high speed using square wave drive. The monitoring of the desired speed of the motor however continues, so that once the desired speed is a high speed the change of operation of the motor can be taken immediately. In Step **82** if it is found that the desired speed is indeed a low speed, and a change of the motor drive method is needed, then the method goes to Step **84.**

In this embodiment, prior to changing the control signal from square wave drive to sine wave drive, and in turn reducing the motor speed from a high speed to a low speed, the brushless motor controller performs an additional step **84** to reduce the speed of the motor first using the previous (that is, square wave) drive method. This is preferable since if the motor is still running a high speed but the drive method is immediately changed to sine wave drive, there will be a drastic increase in the power consumption of the motor due to the sine wave drive, and there will be a large amount heat generated. The power consumption and heat generated pose risks to the motor structure. Therefore, it is preferable to reduce the speed first before switching to sine wave drive, so that when sine wave control signal is applied the speed is at a relatively low level (which is also referred as a safe value for sine wave drive), which would pose problems to the hardware of the motor. In one example, the safe value of the rotational speed is 1300rpm.

After Step **84,** the brushless motor controller then temporarily shuts off electrical currents supplied to the brushless motor in Step **88** until the rotor of the motor reaches a specific angular position, so that when the output of the sine wave control signal starts it is synchronized with the rotation of the motor. Afterwards, the microcontroller detects the sensor outputs of the Hall sensors to determine if it is the time to apply excess angle to the control signals. In Step **90** if it is determined that the there is no change in the Hall sensor readings, which means that the rotor has not reached a desired position, then the microcontroller uses mean values of the sensor outputs to output the sine wave signal. However, if in Step **90** it is determined that the there is a change in the Hall sensor readings, which means that the rotor has reached a desired position, then the microcontroller apply an excess angle to the motor control signal. In this exemplary embodiment, the excess angle is fixed to 40° for Levels 1-3. After the excess angle is applied, the motor then runs at a constant low speed (in one of the Levels 1-3) in Step **94.** The above change of motor drive methods may be iterated so that a dynamic change may be made multiple times during the motor operation.

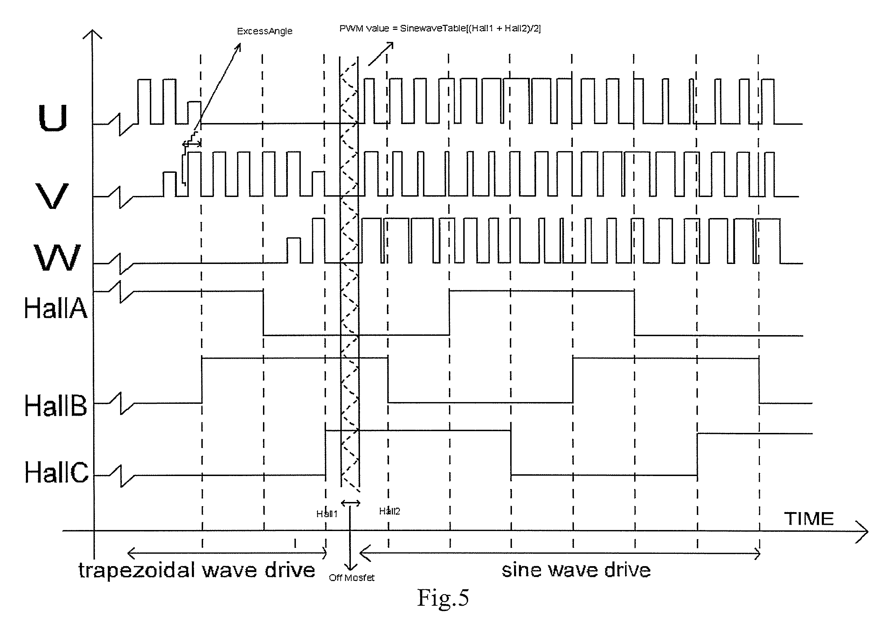

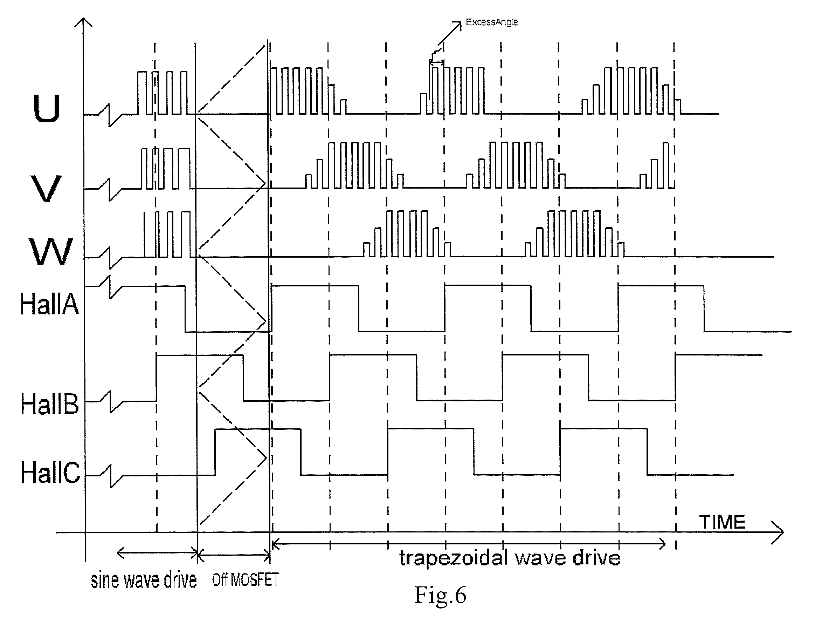

Figs 5 and 6 illustrate separately the change of motor drive methods from trapezoidal wave drive (that is square wave drive) to sine wave drive, and vice versa, according to examples of the motor control schemes according to the present invention. In Fig. 5, as one can see initially trapezoidal wave signals (i.e. square wave signals) are outputted, where the three phase control signals U, V and W are substantially in phase with the Hall sensors outputs HallA, HallB and HallC respectively. Before changing the control signal to sine wave signal, the motor driving circuits including the MOSFETs are temporality shut down. Before the motor controller starts to drive the motor using sine wave signal, the duty cycle of the sine wave signal is calculated as described above. The sine wave signal with the desired duty cycle is then outputted to drive the motor. Also can be seen from Fig. 5 is that the amplitudes of the trapezoidal wave and sine wave signals are substantially the same.

In Fig. 6, as one can see initially sine wave signals are outputted, where the three phase control signals U, V and W are substantially in phase with the Hall sensors outputs HallA, HallB and HallC respectively. Before changing the control signal to trapezoidal wave signal, the motor driving circuits including the MOSFETs are temporality shut down. Before the motor controller starts to drive the motor using trapezoidal wave signal, the duty cycle of the sine wave signal is determined by using the look-up table as described above. The trapezoidal wave signal with the desired duty cycle is then outputted to drive the motor. After one cycle of trapezoidal wave signal outputted, the phase of the signal is adjusted by an excess angle as described previously to improve the performance of the motor. Also can be seen from Fig. 6 is that the amplitudes of the trapezoidal wave and sine wave signals are substantially the same.

Tables 2 and 3 below show the measurement data of noises and power consumption of a brushless motor which is connected to a brushless motor controller made according to the present invention. The data are represented using separately sine wave drive and square wave drive. One can see that the power consumption of the motor under square wave shown in Fig. 2, is less than that of the sine wave drive show in Fig. 3 for any given rotational speed. The difference in power consumption is even larger when the rotational speed is high, for example at a speed of 1530rpm the power consumption different is 32W compared to a difference of only 6.3W at a speed of 550rpm. On the other side, the noise generated by the motor is clearly smaller in the sine wave drive compared to the square wave drive. The present invention by using the dynamic change of motor control method, is therefore able utilize advantages of both sine wave drive and square wave drive and overcome their respective shortcomings.

**Table 2**

| Square Wave: | | | | |
|---|---|---|---|---|
| RPM | 550 | 750 | 1250 | 1530 |
| Power(W) | 9.3 | 13.3 | 36.1 | 64.5 |
| dB | 42 | 46 | 52 | 61 |

**Table 3**

| Sine Wave: | | | | |
|---|---|---|---|---|
| RPM | 550 | 750 | 1250 | 1530 |
| Power(W) | 15.6 | 18.7 | 45.1 | 96.5 |
| dB | 37 | 40 | 46 | 55 |

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

For example, the above embodiments describe sine wave control signal and square wave control signal as the two alternative control signals used for controlling the same brushless motor during different speed regions. However, those skilled in the art should realize that other types of PWM control signals can also be used and they are not limited to sine wave control signals and square wave control signals. Also, it is not necessary to limit the use of sine wave drive in the low speed regions and square wave drive in the high speed regions. Rather, if it is more suitable for specific types of brushless motors, sine wave drive may also be used for the high speed operation and square wave drive be used for the low speed operation instead.

Even if it is not shown in the figures above, to change the motor speed as long as the type of control signal does not change (i.e. from sine wave drive to square wave drive or vice versa), then the speed can be adjusted by altering the control signal directly, which will be readily understood by those skilled in the art.

In addition, although the above embodiments describe a change of control signal based on a threshold of speed, those skilled in the art should realize that this is not absolute necessary. It is also possible to change the type of control signal at any speed level of the value using the control method described in the present invention, and such change would be a preference of the user.

## Claims

1. A brushless motor controller comprising:
a) a microcontroller adapted to connect to one or more rotor position detector of an external brushless motor; and
b) a plurality of motor driving circuits adapted to connect to a plurality of windings of said external brushless motor; said microcontroller connected to said plurality of motor driving circuits;
wherein said microcontroller is adapted to, based on a desired speed of said external brushless motor, output one of a first motor control signal and a second motor control signal to said motor driving circuits for driving said external brushless motor; said first and second motor control signals having different waveform shapes.

2. The brushless motor controller according to claim 1, wherein said microcontroller is configured to output said first motor control signal when a rotational speed of said external brushless motor is below a threshold; said microcontroller configured to output said second motor control signal when said rotational speed of said external brushless motor is above said threshold;
optionally, when said microcontroller is about to change from outputting said first motor control signal to outputting said second motor control signal or vice versa, said microprocessor controls said motor driving circuits to cease supplying electrical currents to said plurality of windings of said external brushless motor for a predetermined period of time;
optionally, said predetermined period of time is chosen such that after said change, said first motor control signal or second motor control signal becomes synchronized with rotation of said external brushless motor;
optionally, wherein said synchronization of said first motor control signal or second motor control signal, with said rotation of said external brushless motor, comprises configuring said first motor control signal or second motor control signal to be in phase with output signals of said rotor position detector.

3. The brushless motor controller according to claim 2, wherein said microcontroller further comprises a memory; said memory storing information comprising a first look-up table; said microcontroller further determining a duty cycle of said first motor control signal or second motor control signal according to said first look-up table after said change.

4. The brushless motor controller according to claim 3, wherein in said first look-up table, each value of said duty cycle corresponds to a value of said rotational speed of said external brushless motor.

5. The brushless motor controller according to claim 2, wherein before or after said microcontroller changes from outputting said first motor control signal to outputting said second motor control signal or vice versa, said microprocessor applies a phase shift to said first motor control or said second motor control signal;
optionally, said microcontroller further comprises a memory which stores information comprising a second look-up table; said phase shift determined by said microcontroller from said second look-up table;
optionally, in said second look-up table, each value of said phase shift corresponds to a value of said rotational speed of said external brushless motor.

6. The brushless motor controller according to claim 2, wherein when said microcontroller is about to change from outputting said second motor control signal to outputting said first motor control signal, and before said motor driving circuits ceasing to supply said electrical current to said plurality of windings, said microprocessor controls said motor driving circuits to decrease said rotational speed of said motor to a safety value for said first motor control signal.

7. The brushless motor controller according to any one of the preceding claims, wherein said first motor control signal is a sine wave signal, and said second motor control signal is a square wave signal;
optionally, said sine wave signal and said square wave signal have the same amplitudes.

8. The brushless motor controller according to any one of the preceding claims, wherein said desire speed is supplied to said microcontroller by a user inputting device connected to said brushless motor controller.

9. The brushless motor controller according to any one of the preceding claims, wherein said rotor position detectors are Hall effect sensors.

10. A method of controlling a brushless motor, comprising the steps of:
a) running a brushless motor at an original rotational speed by one of a first motor control and a second motor control signal; and
b) changing said brushless motor to run at a target rotational speed by the other one of a first motor control and a second motor control signal;
wherein said target rotational speed being different from said original rotational speed; said first and second motor control signals having different waveform shapes.

11. The method according to claim 10, wherein said running step comprises outputting said first motor control signal for controlling said brushless motor when a rotational speed of said external brushless motor is below a threshold; and outputting said second motor control signal for controlling said brushless motor when a rotational speed of said external brushless motor is above said threshold;
optionally, further comprises the step of ceasing supply of electrical currents to a plurality of windings of said brushless motor for a predetermined period of time before said changing step;
optionally, said predetermined period of time is chosen such that after said step of ceasing supply of said electrical currents, said first motor control signal or second motor control signal becomes synchronized with rotation of said brushless motor; optionally, said synchronization of said first motor control signal or second motor control signal, with said rotation of said external brushless motor, comprising the step of configuring said first motor control signal or second motor control signal to be in phase with output signals of said rotor position detector.

12. The method according to claim 11, further comprises the step of setting, before said changing step, a duty cycle of said first motor control signal or second motor control signal at said target speed;
optionally, said setting step comprises looking up for a value of said duty cycle in a first look-up table according to said target speed of said brushless motor.

13. The method according to claim 11, further comprises the step of applying a phase shift to said first motor control or said second motor control signal before or after said changing step;
optionally, said phase shift is determined by looking up in a second look-up table according to said target speed of said brushless motor.

14. The method according to claim 11, further comprises the step of decreasing said original speed to a safety value for said other one of first motor control signal or said second motor control signal at said target speed, if said original speed is higher than said target speed.

15. The method according to any one of the preceding claims, wherein said first motor control signal is a sine wave signal, and said second motor control signal is a square wave signal;
optionally, said sine wave signal and said square wave signal have the same amplitudes.
